# EUROPEAN PATENT SPECIFICATION

(11) **EP 2 557 666 B1**
(45) Date of publication and mention of the grant of the patent: **20.05.2020**
(21) Application number: 12176007.8
(22) Date of filing: 11.07.2012
(51) Int. Cl.: H02K 3/52

(54) **EPS motor**
EPS-Motor
Moteur EPS

(30) Priority: 10.08.2011 KR 20110079527; 10.08.2011 KR 20110079531
(43) Date of publication of application: 13.02.2013
(73) Proprietor: LG Innotek Co., Ltd., Seoul, 04637 (KR)
(72) Inventor: Woo, Shunghun, 100-714 SEOUL (KR); Lee, Myoungseok, 100-714 SEOUL (KR)
(74) Representative: Novagraaf Technologies

(56) References cited:
- JP-A- 2009 247 138
- JP-A- 2010 233 327
- JP-A- 2011 067 056
- US-A1- 2004 145 261
- US-A1- 2007 273 221
- US-A1- 2007 278 875
- US-A1- 2008 211 357

## Description

### CROSS-REFERENCE TO RELATED APPLICATION

### BACKGROUND OF THE DISCLOSURE

### 1. Field of the Disclosure

The present disclosure relates to an EPS (electronic power steering) motor.

### 2. Discussion of the Related Art

Generally, almost every vehicle employs an electric power-assist steering system. Such an electric power-assist steering system generates an assist force based on the steering torque and the steering angle, so as to enhance the steering performance of the vehicle.

That is, a steering system that assists a steering force of a vehicle with a separate power is used to enhance the motion stability of a vehicle. Conventionally, the auxiliary steering device uses hydraulic pressure, but an Electronic Power Steering (EPS) system has been increasingly employed these days that is adapted to transmit a rotation output of an electric motor to a steering shaft via a speed reduction mechanism from a viewpoint of a reduction in engine load, a reduction in weight, an enhanced steering stability and a quick restoring force.

The EPS system is such that an Electronic Control Unit (ECU) drives a motor in response to steering conditions detected by a speed sensor, a torque angle sensor and a torque sensor to enhance a steering stability and provides a quick restoring force, whereby a driver can steer a vehicle safely.

The EPS system is also such that a motor assists a torque manipulating a steering wheel to allow a driver to steer a vehicle with less power, where the motor employs a Brushless Direct Current (BLDC) motor.

Examples of known EPS systems are described in the patent publications US 2008/0211357 A1, US 2004/0145261 A1 and JP 2009 247138 A.

Generally, the BLDC motor includes a housing, a cover member forming an exterior look of the motor, a stator formed at an inner surface of the housing, and a rotor centrally arranged at the stator for rotation in response to an electromagnetic, mutual interaction with the stator. The rotor is rotatably supported by a rotation shaft, and an upper side of the rotation shaft is connected to a steering axle to provide a power assisting the steering as mentioned above.

Meanwhile, the stator is such that a cylinder-shaped stator core coupled with a plurality of divided cores is wound with a coil, and the coil is conductibly connected to a bus bar through a coil terminal. The bus bar is provided with an approximate shape of a ring and coupled to an upper side of the stator core. The bus bar is formed with an insulating resin material, and circumferentially formed therein with terminals conductibly connected to the coil terminals, each at a predetermined interval.

The bus bar is protrusivly formed at a lower side thereof with a plurality of guide lugs for guiding a connection position with the stator core, where the guide lugs are inserted into a guide groove formed at a predetermined interval along a periphery of the stator core.

Meanwhile, in a case the bus bar thus configured is assembled with the stator core, a twist may be generated along a coil tension of the coil wound on the stator core to twist an assembled position between the guide lug and the guide groove. If the bus bar is assembled in a twisted state, a position of PCB (Printed Circuit Board) provided along an upper side of the bus bar is also changed, whereby the PCB may be assembled in a twisted state.

If the PCB is assembled in the twisted state, an error may be problematically generated on a measurement value of Hall sensor mounted at the PCB for detecting a position of the rotor.

Meanwhile, the bus bar is fixedly arranged with a plurality of metal members electrically connected to the coil terminal, each member being insulated by an insulator. The bus bar takes an approximate shape of a doughnut to correspond to an upper surface of the stator. The bus bar is externally arranged with terminals for being connected to the coil terminal.

The shape of the bus bar is changed depending on a connected power, and generally, an EPS (Electronic Power Steering) motor is such that each input/output terminal is sequentially arranged at a periphery of the bus bar through a 3-phase circuit.

Meanwhile, in a case coil is connected using the bus bar, there is a difficulty in process of connecting the coil to the bus bar, and miniaturization of a motor experiences a difficulty, because a height of EPS motor increases as much as a height of the bus bar.

Another problem is that a complicated process is needed to increase a process time excessively, because in order to manufacture a bus bar, a bus terminal must be formed and a bus bar body must be molded using an insulator.

### BRIEF SUMMARY

The present disclosure is directed to cope with the abovementioned problems and disadvantages and the present disclosure provides a stator of an EPS motor having a stator core coupling structure improved in structure to allow a stator core and a bus bar to be always coupled at a precise position. Further, an object of the present invention as defined in the appended claims is to provide an EPS motor improved in structure by removing a bus bar to reduce a height of the motor and to enable a product miniaturization.

Technical problems to be solved by the present disclosure are not restricted to the above-mentioned description, and any other technical problems not mentioned so far will be clearly appreciated from the following description by the skilled in the art.

In one general aspect of the present disclosure, there is provided a stator of an EPS motor, the stator comprising: a stator core wound by a coil and provided in a cylindrical shape by coupling of a plurality of divided cores; a bus bar conductively connected to the coil to be coupled to an upper side of the stator core; and a guide unit guiding the bus bar to a coupled position determined by the stator core. Preferably, but not necessarily, the guide unit includes a guide groove formed at a periphery of the stator core in a parallel direction with a central axis of the stator core, and a guide lug protrusively formed toward a floor surface of the bus bar to be coupled to the guide groove.

Preferably, but not necessarily, the guide lug forms a taper unit at a position near to both wall surfaces of the guide groove and has a pointed shape to a direction the guide groove is inserted.

Preferably, but not necessarily, the guide lug and the guide groove are provided in a mutually complimentary shape.

Preferably, but not necessary, the guide lug takes a square shape at a cross-section perpendicular to a direction the guide groove is inserted.

Preferably, but not necessary, a plurality of the guide lugs is protrusively formed along a circumference of the bus bar.

Preferably, but not necessary, a total of 12 divided cores are coupled to form the stator core, and the guide lug is coupled to two continuous divided cores, where a total of six of the two divided cores are provided in a skipping manner, and an inner angle is 120 degrees that is formed between imaginary extension lines connecting a center of a distance among a pair of guide lugs adjacent to a center of the stator core.

Preferably, but not necessary, the guide lug is injection-molded with a same material as that of a bus bar body.

Preferably, but not necessary, the guide unit further includes a stopper protrusively formed at a periphery of the bus bar body to surface- contact an upper surface of the divided core forming the stator core, and the guide lug is protrusively formed at a floor surface of the stopper.

In another general aspect of the present disclosure, and forming part of the invention defined in the appended claims, there is provided an EPS motor, the motor comprising: a motor housing; a stator mounted at an inner side of the motor housing and including a stator core, a coil wound on the stator core and a coil terminal coupled to a distal end of the coil; a rotor rotatably formed at a center of the stator; a sensing magnet module mounted at an upper side of the rotor for sensing a position of the rotor; a magnetic element disposed opposite to the sensing magnet module to sense a magnetic force of the sensing magnet module; and a multi-layered PCB including a sensor layer mounted with the magnetic element and a plurality of power layers respectively connected to powers each power having a different polarity supplied to the coil.

Preferably, but not necessarily, the plurality of power layers includes first, second and third power layers, when connected to a 3-phase power.

Preferably, but not necessarily, the multi-layered PCB covers an entire upper surface of the motor housing.

Preferably, but not necessarily, the multi-layered PCB includes a terminal hole penetratively coupled to the coil terminal.

Preferably, but not necessarily, the terminal hole is conductively connected to any one layer of the first, second and third power layers.

Preferably, but not necessarily, a total of 18 terminal holes are penetratively formed along a peripheral surface of the PCB.

Preferably, but not necessarily, the terminal hole is connected to a power layer mutually different from another adjacent terminal hole to allow coil terminal coupled to the terminal hole to receive a power of polarity mutually different from that of the coil terminals coupled to another adjacent terminal hole.

The stator according to the present disclosure has an advantageous effect in that, even if a coupled position is a bit twisted between a guide lug protrusively formed at a bottom side of a bus bar and a guide groove formed at a periphery of a stator core, a PCB mounted at an upper side of the bus bar is mounted at a precise position at all times, because the coupled position between the guide lug and the guide groove is guided by a tapered unit formed at the guide lug, whereby a measurement signal of a Hall sensor sensing a position of a rotor can maintain a predetermined error scope.

The EPS motor according to the invention has an advantageous effect in that, instead of a bus bar, a plurality of bus bar layers is formed on an existing PCB installed for finding a rotor position to reduce a height of a rotor as much as a height of the bus bar, whereby it is possible to provide a miniaturized EPS motor, to replace the bus bar with a power layer of the PCB and to reduce material cost resultant from a reduced number of parts.

### BRIEF DESCRIPTION OF THE DRAWINGS

The accompanying drawings, which are included to provide a further understanding of the present disclosure and are incorporated in the present disclosure and constitute a part of this application, and together with the description, serve to explain the principle of the disclosure. In the drawings:
FIG. 1 is a lateral view illustrating a coupled state between a bus bar and a stator core according to an exemplary embodiment of the present disclosure;
FIGS. 2 and 3 are schematic views illustrating an enlarged coupled area between a bus bar and a stator core according to an exemplary embodiment of the present disclosure;
FIG. 4 is a cross-sectional view taken along line B-B of a stator core.
FIG. 5 is a plan view illustrating an EPS motor according to an exemplary embodiment of the present disclosure and forming part of the present invention;
FIG. 6 is a lateral cross-sectional view of the EPS motor of FIG.5 that is partially cut out according to an exemplary embodiment of the present disclosure and invention; and
FIG. 7 is an enlarged lateral cross-sectional view illustrating a PCB of FIG.6 according to an exemplary embodiment of the present disclosure and invention.

### DETAILED DESCRIPTION

Advantages and features of the present invention may be understood more readily by reference to the following detailed description of exemplary embodiments and the accompanying drawings. Detailed descriptions of well-known functions, configurations or constructions are omitted for brevity and clarity so as not to obscure the description of the present disclosure with unnecessary detail.

Thus, the present disclosure is not limited to the exemplary embodiments which will be described below, but may be implemented in other forms. In the drawings, the width, length, thickness, etc. of components may be exaggerated or reduced for the sake of convenience. Furthermore, throughout the descriptions, the same reference numerals will be assigned to the same elements in the explanations of the figures, and explanations that duplicate one another will be omitted.

Accordingly, the meaning of specific terms or words used in the specification and claims should not be limited to the literal or commonly employed sense, but should be construed or may be different in accordance with the intention of a user or an operator and customary usages.

Therefore, the definition of the specific terms or words should be based on the contents across the specification. The terms "a" and "an" herein do not denote a limitation of quantity, but rather denote the presence of at least one of the referenced item.

Now, a stator and an EPS motor having the stator according to the exemplary embodiments of the present disclosure will be described in detail with reference to the accompanying drawings.

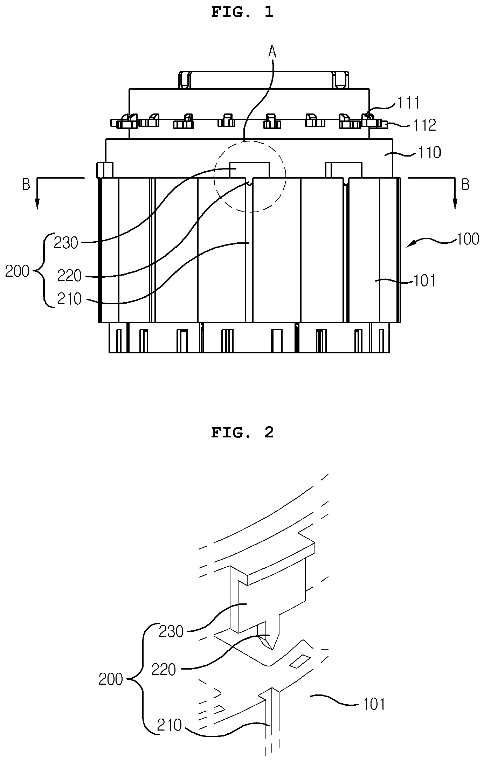

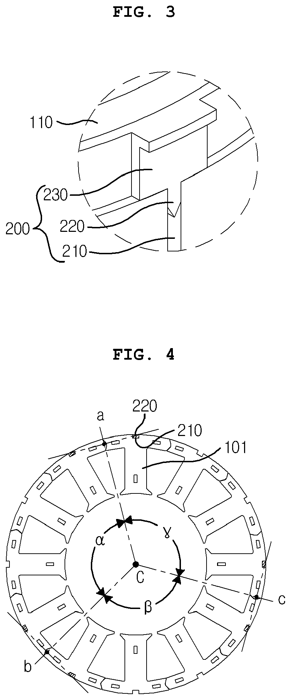

FIG. 1 is a lateral view illustrating a coupled state between a bus bar and a stator core according to an exemplary embodiment of the present disclosure, FIGS. 2 and 3 are schematic views illustrating an enlarged coupled area between a bus bar and a stator core according to an exemplary embodiment of the present disclosure, and FIG.4 is a cross-sectional view taken along line B-B of a stator core.

As illustrated in the figures, a stator of an EPS motor according to the present disclosure includes a stator core 100, a bus bar 110 and a guide unit 200.

The stator core 100 is provided in a cylindrical shape by being assembled with a plurality of divided cores 101. The stator core 100 is wound with a coil via an insulator, and is rotatably formed at a space unit formed in the middle with a cylindrical motor (not shown) in interaction with the coil-wound stator core 100.

The bus bar 110 is conductively connected to the coil and is coupled to an upper side of the stator core 100. The bus bar is provided with a plurality of terminals 112 connected to a plurality of coil terminals 111 conductively connected to the coil, and each coil is conductively wrapped in a predetermined group, so that each coil can receive a power of mutually different polarity.

Referring to FIGS. 1 and 2, the bus bar 110 is provided in a shape corresponding to that of an upper surface of the stator core 100. Preferably, the bus bar 110 is provided with a centrally opened ring shape. The bus bar 110 is preferably formed by molding using an insulating material such as resin material in a mutually conductively connected state with the terminals 112 of metallic material.

The guide unit 200 is so arranged as to couple the bus bar 110 to the stator core 100, and includes a guide groove 210 and a guide lug 220. According to an exemplary embodiment of the present disclosure, the guide lug 220 is preferably protrusively formed at a bottom surface of a stopper 230 protrusively formed at a periphery of the bus bar 110.

The guide groove 210 is formed at each divided core 110 forming the stator core 100, and is preferably formed at a lateral wall surface of the cylindrically formed stator core 100 in a trench-shaped groove formed in parallel with a central shaft of the stator core 100.

According to an exemplary embodiment of the present disclosure, the guide groove 210 is formed with a cross-section corresponding to that of the guide lug 220 to allow a complementary coupling therebetween. Preferably, the cross-section of the guide groove 210 is provided with one side-open square shape so as to guide a shake-less accurate coupling position.

Preferably, each of the guide lugs 220 is protrusively formed at a periphery of the bus bar 110 at a predetermined interval, and according to an exemplary embodiment of the present disclosure, the guide lug 220 is preferably formed in a protrusive shape on a floor surface of the stopper 230 guiding a coupled position of the bus bar 110. Configuration of the stopper 230 will be described later.

The guide lug 220 slides into the guide groove 210 for coupling therebetween, so that the bus bar 110 can be positioned at an upper surface of the stator core 100 without any shake. Preferably, a cross-section to a surface perpendicular to an insertion direction (B arrow direction in FIG.2) takes an approximately square shape.

Furthermore, as shown in FIG.3, the guide lug 220 is formed at a distal end with a taper unit 221, whereby the distal end of the guide lug 220 is pointedly formed toward an insertion direction.

In a case the distal end of the guide lug 220 is formed with the taper unit 221, and even if the guide lug 220 is inserted into the guide groove 210 in a bit twisted state, the taper unit 221 is brought into contact with a wall surface of the guide groove 210 to allow the guide lug 220 to slide and to allow a center of the guide lug 220 to match that of the guide groove 210, whereby even if the bus bar 110 and the stator core 100 are not positioned in an accurate alignment in an initial coupling therebetween, a precise coupling position can be guided in response to the sliding motion between the guide lug 220 and the guide groove 210.

Meanwhile, although the guide lug 220 may be directly formed on a floor surface of the periphery of the bus bar 110, the guide lug 220 may be formed on a floor surface of the plurality of stoppers 230 protrusively formed at the periphery of the bus bar 110 and surface-contactably formed at a floor surface thereof with an upper surface of the stator core 100.

According to an exemplary embodiment of the present disclosure, each of the stoppers 230 is protrusively formed at the periphery of the bus bar 100 at a predetermined interval, and a total of six stoppers 230 may be provided as shown in FIGS. 1, 2 and 3.

That is, according to an exemplary embodiment of the present disclosure, the stator core 100 is formed with a total of 12 divided cores, where a total of six guide lugs 220 are formed at the stopper 230, being coupled to two continuous divided cores 101, and skipping the two divided cores 101. Then, as shown in FIG. 4, inner angles (a)(β)(γ), each of 120 degrees, may be formed among imaginary extension lines (a)(b)(c) connecting a center of the stator core 100 and a center of a distance between a pair of adjacent guide lugs 220.

Meanwhile, the stopper 230 and the guide lug 220 protrusively formed from the floor surface of the stopper 230 are formed with the same material as that of the bus bar 110, and are preferably formed by injection molding with the bus bar 110.

According to the present disclosure, even if the divided cores 101 are assembled in a bit twisted state due to winding of the coil, the divided cores 101 are tightly adhered to a precise position in a cylindrical shape by coupling between the guide lug 220 and the guide groove 210, and the bus bar 110 is prevented from being twisted and is accurately installed at an upper surface of the stator core 100, whereby the PCB having a Hall sensor installed at an upper surface of the bus bar 110 can be accurately assembled.

Now, an EPS motor according to an exemplary embodiment of the present disclosure will be described with reference to the accompanying drawings.

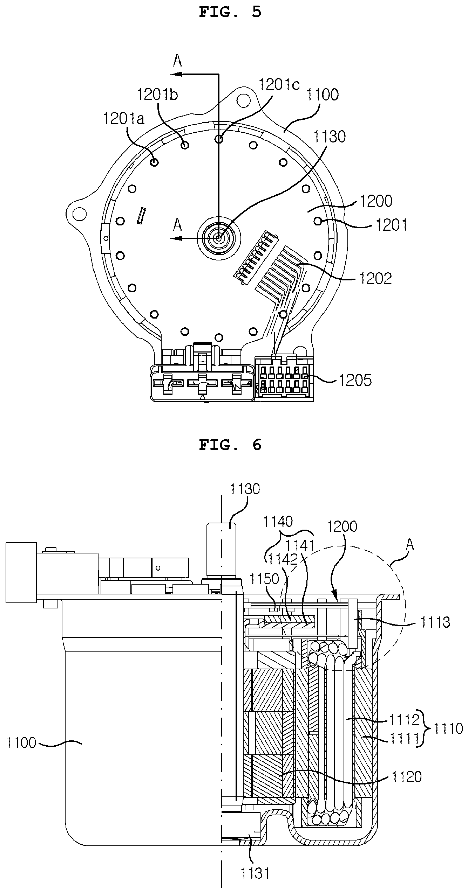

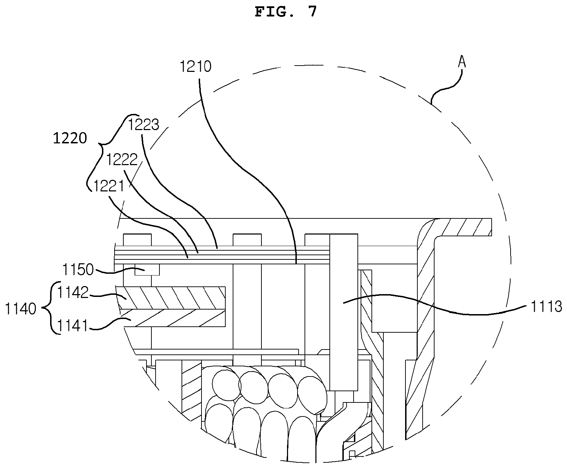

FIG.5 is a plan view illustrating an EPS motor according to an exemplary embodiment of the present disclosure, FIG.6 is a lateral cross-sectional view of the EPS motor of FIG.5 that is partially cut out according to an exemplary embodiment of the present disclosure, and FIG.7 is an enlarged lateral cross-sectional view illustrating a PCB of FIG.6 according to an exemplary embodiment of the present disclosure.

Referring to FIGS. 5 and 6, the EPS motor includes a motor housing 1100, a stator 1110, a rotor 1120, a rotation shaft 1130, a sensing magnet module 1140, a magnetic element 1150 and a multi-layered PCB 1200

The motor housing 1100 is provided in an approximate cylindrical shape, and formed thereon with an opening with a bottom surface being closed. The motor housing 1100 is mounted therein with the stator 1110, the rotor 1120 and the rotation shaft 1130 rotatably supporting the rotor 1120.

The stator 1110 includes a stator core 1111, a coil 1112 and a coil terminal 1113. The stator core 1111 is so formed as to allow the coil 1112 to be wound thereon along the circumferential surface, and a distal end of the coil 1112 is conductively connected to the coil terminal 1113. At this time, the coil terminal 1113 is provided with a pillar shape having a predetermined diameter and length as shown in FIG.5.

The rotor 1120 is rotatably formed at a center of the stator 1110, and a plurality of magnets is formed at the periphery of the rotor core.

The rotation shaft 1130 is coaxially formed with the rotor 1120, where a distal end of the rotation shaft 1130 is rotatably supported by a bottom bearing 1131 formed at a floor surface of the housing 1100, and the other distal end is supported by an upper bearing formed at a cover member (not shown).

The sensing magnet module 1140 includes a plate 1141 and a sensing magnet 1142. The plate 1141 is provided with an approximate disk shape, and is fixed thereon by the sensing magnet 1142 using an adhesive. The sensing magnet 1142 is preferably formed with a doughnut shape having a central through hole. The magnetic element 1150 functions to sense changes in magnetic fields of the sensing magnet 1142, and is formed opposite to the sensing magnet 1142

The multi-layered PCB 1200 is formed at the rotor 1120 and an upper side of the sensing magnet module 1140, and preferably takes an approximately disk-like shape to thereby close an entire opening at the upper side of the motor housing 1100 as illustrated in FIG.5.

The multi-layered PCB 1200 includes a sensor layer 1210 mounted with the magnetic element 1150 and a plurality of power layers 1220 respectively connected to powers, each power having a different polarity supplied to the coil.

According to an exemplary embodiment of the present disclosure, the plurality of power layers 1220 preferably includes first, second and third power layers, when connected to a 3-phase power, as depicted in FIG.7.

The multi-layered PCB 1200 includes a terminal hole 1201 penetratively coupled to the coil terminal 1113 conductively connected to the coil 1112. Preferably, the terminal hole 1201 conductively connected to the coil terminal 1113 is conductively connected to any one layer of the first, second and third power layers 1221, 1222, 1223. Although a total of 18 terminal holes 1201 are penetratively formed along a peripheral surface of the PCB 1200, the number of terminal holes is not limited thereto and may be increased or decreased based on size and capacity of motor.

In a case the first power layer 1221 is applied with a U phase of power, the second power layer 1222 is applied with a V phase of power and the third power layer 1223 is applied with a W phase of power, and in a case a first terminal hole 1201a on the multi-layered PCB 1200 is conductively connected to the first power layer 1221, the first terminal hole 1201a is insulated from the second and third power layers 1222, 1223. Furthermore, a second terminal hole 1201b adjacent to the first terminal hole 1201a is insulated from the first and third power layers 1221, 1223, and conductively connected to the second power layer 1222, a third terminal hole 1201c is insulated from the first and second power layers 1221, 1222, and conductively connected to the third power layer 1223.

Thus, the coil terminal 1113 penetratively coupled to the terminal hole 1201 is possible to apply a power of mutually different polarity to the coil 1112 side, based on position of the inserted terminal hole 1201.

Furthermore, an outermost surface of the multi-layered PCB 1200 is provided with a power terminal 1202 conductively connected to each of the first, second and third power layers 1221, 1222, 1223, where the power terminal 1202 is connected to a power terminal 1205 connected to an outside power source.

According to the present disclosure, the first, second and third power layers 1221, 1222, 1223 of the multi-layered PCB 1200 is formed at a fundamental base with an insulator such as resin material, and only a portion necessary for conduction is pattern-formed with a conductive material such as a metal.

Thus, there is no mold-forming process for configuring an insulator, and each of the first, second and third power layers 1221, 1222, 1223 can form a power supply pattern at a position of the terminal hole 1201 that needs power supply for each polarity whereby a power of different polarity can be simply supplied to the coil 1112 at a reasonable price over the conventional bus bar manufacturing method.

Furthermore, the power layer 1220 can be stacked along with the sensor layer 1210 to form a single multi-layered PCB 1200, whereby the EPS motor can be manufactured with a relatively thin thickness.

Although embodiments have been described with reference to a number of illustrative embodiments thereof, it should be understood that numerous other modifications and embodiments can be devised by those skilled in the art that will fall within the principles of this disclosure. More particularly, various variations and modifications are possible in the component parts and/or arrangements of the subject combination arrangement within the scope of the disclosure, the drawings and the appended claims.

The stator and the EPS motor having the stator according to the present disclosure have industrial applicability in that, even if a coupled position is a bit twisted between a guide lug protrusively formed at a bottom side of a bus bar and a guide groove formed at a periphery of a stator core, a PCB mounted at an upper side of the bus bar is mounted at a precise position at all times, because the coupled position between the guide lug and the guide groove is guided by a tapered unit formed at the guide lug, whereby a measurement signal of a Hall sensor sensing a position of a rotor can maintain a predetermined error scope, and in that, instead of a bus bar, a plurality of bus bar layers is formed on an existing PCB installed for finding a rotor position to reduce a height of a rotor as much as a height of the bus bar, whereby it is possible to provide a miniaturized EPS motor, to replace the bus bar with a power layer of the PCB and to reduce material cost resultant from a reduced number of parts.

## Claims

1. An EPS motor comprising:
a motor housing (1100);
a stator (1110) mounted at an inner side of the motor housing (1100) and including a stator core (1111), a coil (1112) wound on the stator core (1111) and a coil terminal (1113) coupled to a distal end of the coil (1112);
a rotor (1120) rotatably formed at a center of the stator (1110);
a sensing magnet module (1140) mounted at an upper side of the rotor (1120) for sensing a position of the rotor (1120); and
a magnetic element (1150) disposed opposite to the sensing magnet module (1140) to sense a magnetic force of the sensing magnet module (1140); the EPS motor being **characterised by**
a multi-layered PCB (1200) formed in a disk shape at an upper side of the sensing magnet module (1140) and including a plurality of power layers (1220) respectively connected to powers, each power having a different polarity supplied to the coil (1112), and a sensor layer (1210) mounted with the magnetic element (1150),
and wherein the coil terminal (1113) is provided with a pillar shape having a predetermined diameter and length to conductively connect to the distal end of the coil (1112).

2. The EPS motor of claim 1, wherein the plurality of power layers (1220) includes first, second and third power layers (1221, 1222, 1223), when connected to a 3-phase power.

3. The EPS motor of claim 1, wherein the multi-layered PCB (1200) covers an entire upper surface of the motor housing (1100).

4. The EPS motor of claim 3, wherein the multi-layered PCB (1200) includes a terminal hole (1201) penetratively coupled to the coil terminal (1113).

5. The EPS motor of claim 4, wherein the terminal hole (1201) is conductively connected to any one layer of the first, second and third power layers (1221, 1222, 1223).

6. The EPS motor of claim 5, wherein a total of 18 terminal holes (1201) are penetratively formed along a peripheral surface of the multi-layered PCB (1200).

7. The EPS motor of claim 6, wherein the terminal hole (1201a) is connected to a power layer (1221) mutually different from another adjacent terminal hole (1201b) to allow coil terminals (1113) coupled to the terminal hole (1201a) to receive a power of polarity mutually different from that of the coil terminals (1113) coupled to another adjacent terminal hole (1201b).

## Patentansprüche

1. EPS-Motor, umfassend:
ein Motorgehäuse (1100);
einen Stator (1110), der an einer Innenseite des Motorgehäuses (1100) angebracht ist und einen Statorkern (1111), eine um den Statorkern (1111) gewickelte Spule (1112) und einen Spulenanschluss (1113) einschließt, der mit einem distalen Ende der Spule (1112) gekoppelt ist;
einen Rotor (1120), der drehbar in einer Mitte des Stators (1110) gebildet ist;
ein Magnetsensormodul (1140), das an einer Oberseite des Rotors (1120) angebracht ist, um eine Position des Rotors (1120) zu erfassen; und
ein magnetisches Element (1150), das dem Magnetsensormodul (1140) gegenüberliegend angeordnet ist, um eine magnetische Kraft des Magnetsensormoduls (1140) zu erfassen;
wobei der EPS-Motor **gekennzeichnet ist durch**
eine mehrlagige Leiterplatte (1200), die in einer Scheibenform an einer Oberseite des Magnetsensormoduls (1140) gebildet ist und eine Vielzahl von Versorgungslagen (1220), die jeweils mit Leistungen verbunden sind, wobei jede Leistung eine unterschiedliche Polarität aufweist, die der Spule (1112) zugeführt wird, und eine Sensorlage (1210) einschließt, die am magnetischen Element (1150) angebracht ist, und wobei
der Spulenanschluss (1113) mit einer Säulenform versehen ist, die einen vorbestimmten Durchmesser und eine vorbestimmte Länge aufweist, um leitfähig mit dem distalen Ende der Spule (1112) zu verbinden.

2. EPS-Motor nach Anspruch 1, wobei die Vielzahl von Versorgungslagen (1220), wenn diese mit einer 3-Phasen-Versorgung verbunden sind, eine erste, zweite und dritte Versorgungslage (1221, 1222, 1223) einschließen.

3. EPS-Motor nach Anspruch 1, wobei die mehrlagige Leiterplatte (1200) eine gesamte obere Fläche des Motorgehäuses (1100) bedeckt.

4. EPS-Motor nach Anspruch 3, wobei die mehrlagige Leiterplatte (1200) ein Anschlussloch (1201) einschließt, das durchtretend mit dem Spulenanschluss (1113) gekoppelt ist.

5. EPS-Motor nach Anspruch 4, wobei das Anschlussloch (1201) leitfähig mit einer Lage aus der ersten, zweiten und dritten Versorgungslage (1221, 1222, 1223) verbunden ist.

6. EPS-Motor nach Anspruch 5, wobei entlang einer Umfangsfläche der mehrlagigen Leiterplatte (1200) insgesamt 18 Anschlusslöcher (1201) durchtretend gebildet sind.

7. EPS-Motor nach Anspruch 6, wobei das Anschlussloch (1201a) mit einer Versorgungslage (1221) verbunden ist, die sich jeweils von der eines anderen, angrenzenden Anschlusslochs (1201b) unterscheidet, um zu ermöglichen, dass Spulenanschlüsse (1113), die mit dem Anschlussloch (1201a) gekoppelt sind, eine Leistung mit einer Polarität empfangen, die sich jeweils von der der Spulenanschlüsse (1113), die mit einem anderen, angrenzenden Anschlussloch (1201b) gekoppelt sind, unterscheidet.

## Revendications

1. Moteur de direction à assistance électronique comprenant :
un carter de moteur (1100) ;
un stator (1110) monté d'un côté intérieur du carter de moteur (1100) et comportant un noyau de stator (1111), une bobine (1112) enroulée sur le noyau de stator (1111) et une borne de bobine (1113) couplée à une extrémité distale de la bobine (1112) ;
un rotor (1120) formé en rotation en un centre du stator (1110) ;
un module d'aimant de captage (1114) monté d'un côté supérieur du rotor (1120) pour capter une position du rotor (1120) ; et
un élément magnétique (1150) disposé opposé au module d'aimant de captage (1140) pour capter une force magnétique du module d'aimant de captage (1140) ;
le moteur de direction assistée électronique étant **caractérisé par**
une carte de circuit imprimé à couches multiples (1200) formée en une forme de disque d'un côté supérieur du module d'aimant de captage (1140) et comportant une pluralité de couches d'alimentation (1220) connectées respectivement à des alimentations, chaque alimentation ayant une polarité différente fournie à la bobine (1112), et une couche de capteur (1210) montée avec l'élément magnétique (1150),
et dans lequel la borne de bobine (1113) est pourvue d'une forme de pilier ayant un diamètre et une longueur prédéterminés à connecter de façon conductrice à l'extrémité distale de la bobine (1112).

2. Moteur de direction à assistance électronique selon la revendication 1, dans lequel la pluralité de couches d'alimentation (1220) comporte des première, deuxième et troisième couches d'alimentation (1221, 1222, 1223), lorsqu'elles sont connectées à une alimentation triphasée.

3. Moteur de direction à assistance électronique selon la revendication 1, dans lequel la carte de circuit imprimé à couches multiples (1200) couvre une surface supérieure entière du carter de moteur (1100).

4. Moteur de direction à assistance électronique selon la revendication 3, dans lequel la carte de circuit imprimé à couches multiples (1200) comporte un trou de borne (1201) couplé de façon pénétrante à la borne de bobine (1113).

5. Moteur de direction à assistance électronique selon la revendication 4, dans lequel le trou de borne (1201) est connecté de façon conductrice à une couche quelconque des première, deuxième et troisième couches d'alimentation (1221, 1222, 1223).

6. Moteur de direction à assistance électronique selon la revendication 5, dans lequel un total de 18 trous de borne (1201) sont formés de façon pénétrante le long d'une surface périphérique de la carte de circuit imprimé à couches multiples (1200).

7. Moteur de direction à assistance électronique selon la revendication 6, dans lequel le trou de borne (1201a) est connecté à une couche d'alimentation (1221) mutuellement différente d'un autre trou de borne (1201b) adjacent pour permettre à des bornes de bobine (1113) couplées au trou de borne (1201a) de recevoir une alimentation de polarité mutuellement différente de celle des bornes de bobine (1113) couplées à un autre trou de borne (1201b) adjacent.
